(19) Europäisches Patentamt / European Patent Office / Office européen des brevets

(11) **EP 3 990 910 B1**

(12) **EUROPEAN PATENT SPECIFICATION**

(45) Date of publication and mention
of the grant of the patent:
**05.06.2024   Bulletin 2024/23**

(21) Application number: **20735675.9**

(22) Date of filing: **26.06.2020**

(51) International Patent Classification (IPC):
**G01N 29/14** *(2006.01)*       **G01N 29/44** *(2006.01)*
**G01N 29/46** *(2006.01)*

(52) Cooperative Patent Classification (CPC):
**G01N 29/14; G01N 29/4427; G01N 29/46;**
G01N 2291/02827

(86) International application number:
**PCT/GB2020/051548**

(87) International publication number:
**WO 2020/260889 (30.12.2020 Gazette 2020/53)**

(54) **IDENTIFYING LIQUID RHEOLOGICAL PROPERTIES FROM ACOUSTIC SIGNALS**

IDENTIFIZIERUNG VON RHEOLOGISCHEN FLÜSSIGKEITSEIGENSCHAFTEN AUS AKUSTISCHEN SIGNALEN

IDENTIFICATION DE PROPRIÉTÉS RHÉOLOGIQUES DE LIQUIDES À PARTIR DE SIGNAUX ACOUSTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **28.06.2019   GB 201909291**

(43) Date of publication of application:
**04.05.2022   Bulletin 2022/18**

(73) Proprietor: **The University of Birmingham Birmingham, West Midlands B15 2TT (GB)**

(72) Inventors:
• **ALBERINI, Federico**
**Birmingham Research Park Vincent Drive Birmingham**
**West Midlands B15 2SQ (GB)**
• **HEFFT, Daniel Ingo**
**Birmingham Research Park Vincent Drive Birmingham**
**West Midlands B15 2SQ (GB)**
• **FORTE, Giuseppe**
**Birmingham Research Park Vincent Drive Birmingham**
**West Midlands B15 2SQ (GB)**

(74) Representative: **Bazant-Hegemark, Florian Concept IP Cheltenham Ltd PO Box 1328 Cheltenham GL50 9EG (GB)**

(56) References cited:
WO-A1-02/052243       US-A- 3 218 852
US-A- 3 854 323       US-A1- 2019 033 898

**Description**

**Field of the Invention**

The invention relates to methods and apparatus for identifying rheological properties of liquids from acoustic signals generated by liquid flow through a pipe.

**Background**

The ability to measure process and product parameters is a key aspect for many manufacturing processes. Modern manufacturing relies on constant measurement to guarantee consistent product quality. One important measure of the state of a liquid in a manufacturing process is its rheological properties, which affect how the liquid behaves during transport and processing, and provides indications for example of the progress of reactions taking place in the liquid. Taking measurements of rheological properties of liquids tends to involve sampling and testing separate from a production line environment, limiting the capability to react to changes in product parameters. A conventional way of measuring the rheological properties of a liquid will involve taking a small sample and measuring its response to a varying shear rate using a cone-plate viscometer. Such a measurement can provide an indication of the basic rheological properties of the liquid, based on a model that may be expressed as:

$$\tau = \tau_0 + k\dot{\gamma}^n$$

where $\tau$ is a shear stress and $\dot{\gamma}$ is a shear rate, $\tau_0$ a yield shear stress, $n$ a flow index and $k$ a consistency $k$ of the liquid. For an ideal Newtonian liquid, the yield shear stress is zero and the flow index is one, making the shear stress increase linearly with shear rate. Non-Newtonian liquids may have a flow index greater or less than one, which are conventionally termed shear thickening or shear thinning liquids. Liquids may also exhibit a yield shear stress, which is the shear stress required to initiate flow. Liquids may also exhibit more complex properties such as time-dependent relationships with applied shear rates.

Acoustic sensing of fluids may be either passive or active. Passive sensing involves sensing acoustic signals generated from a fluid flow itself, whereas active sensing involves injecting an acoustic signal and detecting how this signal is affected by the fluid. Passive acoustic sensing may be used for detection of a flow regime in a multi-phase fluid flow, for example as disclosed in US 5,353,627, where a distinction is made between different flow regimes of a mixture of liquid and air, and in WO 2010/094809 A1 in which passive sensing is used to detect events occurring in a pipe. In WO 02/052243 A1, a signal of fluid is recorded whose flow field is distorted by the presence of an orifice. Active sensing may be used for detection of a flow rate of a liquid, for example as disclosed in US 5,741,980, US 2013/0345994 A1 and US 7,290,450 B2. Active acoustic emission sensors, with its most common set-up being ultrasound or Doppler velocimetry sensors, have been shown to give reliable predictions on factors such as flow rate, degree of gassing or solid content, and work for Newtonian and non-Newtonian fluids [Rahman *et al*, Kotzé *et al.*]. Passive acoustic emission sensors may also be used for leak detection in water pipes by employing in-pipe hydrophones [Khulief & Khalifa] or by recognising acoustic patterns based on signals from a series of sensors [Li & Zhou]. Passive acoustic sensing tends to be focused on multiphase systems [Hou *et al.,* O'Keefe *et al.,* Finfer *et al.*].

**Summary of the Invention**

In accordance with a first aspect of the invention there is provided a method of identifying a rheological property of a liquid flowing in a pipe, as defined in claim 1, the method comprising:

detecting an acoustic signal generated by the liquid flowing in the pipe using a sensor attached to a rod extending from a wall of the pipe into the liquid, the acoustic sensor being attached to an end of the rod on the outer wall of the pipe, the acoustic signal being generated within the rod by the liquid flowing in the pipe, transmitted along the rod and detected by the acoustic sensor;
sampling the acoustic signal to provide a sampled acoustic signal;
transforming the sampled acoustic signal to generate a sampled frequency spectrum;
correlating the sampled frequency spectrum with a stored frequency spectrum from a database of stored frequency spectra of liquids having predetermined rheological properties; and
identifying a rheological property of the liquid based on the stored frequency spectrum.

An advantage of the invention is that a rheological property can be automatically determined for a liquid without having to take representatives samples of the liquid. Instead, the determination is made through passive acoustic sensing and computer-implemented matching of an acoustic signal with a database of known liquids. The level of detail possible from the technique will depend on the size of the database and the accuracy of matching between a measured acoustic signal and a stored acoustic signal of a liquid of known rheological properties. The invention is capable at a basic level of being able to distinguish between Newtonian and non-Newtonian liquids, and whether the liquid is shear thickening or shear thinning, which can be an important parameter in process control of liquid flow in production environments. Determination of other important parameters such as the consistency and yield shear stress may also be possible.

The rod may extend to a centre of an interior volume of the pipe, which tends to maximise the acoustic signal obtained from the liquid flow.

The pipe may comprise an obstruction upstream of the rod, the obstruction configured to increase a pressure drop along the pipe by more than 10%. Including an obstruction upstream of the rod assists in generating acoustic signals that allow for matching of rheological properties by altering the flow pattern within the pipe. Different types and shapes of obstruction may be used, which may to at least some extent be dependent on the type of rheological property to be measured.

As an alternative, or addition, to an obstruction in the pipe, in internal cross-section of the pipe may vary upstream and/or downstream of the acoustic sensor.

The rheological property may be one or more of a yield shear stress $\tau_0$, a flow index $n$ and a consistency $k$ of the liquid, based on a rheological model of $\tau = \tau_0 + k\dot{\gamma}^n$, where $\tau$ is a shear stress and $\dot{\gamma}$ is a shear rate.

The step of correlating the sampled frequency spectrum may be performed using a machine learning algorithm. The algorithm may for example use principle component analysis to correlate the sampled frequency spectrum with the stored frequency spectrum.

The liquid flowing in the pipe may be a single phase liquid. The pipe may be fully flooded with the liquid flowing in the pipe.

The sampled frequency spectrum may comprise a plurality of sections defining a portion of the sampled frequency spectrum, each section being defined by a parameter representing an amplitude of the acoustic signal within the portion of the sampled frequency spectrum, the database comprising stored frequency spectra having a corresponding plurality of sections and parameters. Each of the sampled and stored frequency spectra may for example be defined by between 10 and 100 parameters.

A method of monitoring a manufacturing process of a liquid may comprise:

performing a mixing process on the liquid;
passing the liquid through a pipe; and
performing the method according to the first aspect to identify a stage of the manufacturing process.

An advantage of the above method is that the stage of manufacturing, for example once a mixing stage is complete, may be determined during the process without interrupting the manufacturing process. Variations in properties of the resulting liquid may thereby be reduced, and the manufacturing process may be optimised, for example to determine an optimum time for carrying out mixing after adding an ingredient.

In accordance with a second aspect of the invention, there is provided an apparatus, as defined in claim 8, for identifying a rheological property of a liquid flowing in a pipe, the apparatus comprising:

a pipe through which the liquid is arranged to flow, the pipe comprising an acoustic sensor attached to a rod extending from a wall of the pipe into an internal volume of the pipe, the acoustic sensor arranged to detect an acoustic signal generated by the liquid flowing in the pipe;
a computer connected to the acoustic sensor and configured to:

sample the acoustic signal to provide a sampled acoustic signal;
transform the sampled acoustic signal to generate a sampled frequency spectrum;
correlate the sampled frequency spectrum with a stored frequency spectrum from a database of stored frequency spectra of liquids having predetermined rheological properties; and
identify a rheological property of the liquid based on the stored frequency spectrum, wherein the acoustic sensor is attached to an end of the rod on an outer wall of the pipe and arranged to detect acoustic events generated within the rod by the liquid flowing in the pipe and transmitted along the rod.

The apparatus may form part of a system for processing a liquid, the system comprising a mixing tank for containing the liquid, a measurement loop arranged to divert liquid to and from the mixing tank and the apparatus, in which the pipe forms part of the measurement loop, the apparatus being configured to measure a rheological property of liquid passing through the measurement loop.

In accordance with a third aspect of the invention there is provided a computer program, as defined in claim 14, comprising instructions to cause the apparatus according to the second aspect to perform the method according to the first aspect. The computer program may be provided on a non-transitory storage medium.

The various optional and advantageous features associated with the first aspect may apply also to the apparatus of the second aspect or the program of the third aspect.

**Detailed Description**

The invention is described in further detail below by way of example and with reference to the accompanying drawings, in which:

figure 1 is a schematic diagram of fluid flow in a pipe with an acoustic sensor;
figure 2 illustrate a range of shapes of example obstructions for use with the apparatus of figure 1;
figure 3 is an example sampled acoustic signal in the absence of an obstruction;
figure 4 is an example sampled acoustic signal in the presence of an obstruction;
figures 5 and 6 are example frequency spectra for Newtonian liquids;
figures 7, 8 and 9 are example frequency spectra for liquids exhibiting power law rheological behaviour;
figures 10, 11 and 12 are example frequency spectra for liquids exhibiting Herschel-Bulkley rheological behaviour;
figure 13 is a plot of accuracy as a function of number of features for various machine learning algorithms;
figure 14 is a flow diagram illustrating an example method of identifying a rheological property of a liquid flowing in a pipe;
figures 15a-c illustrate an acoustic sensor with alternative pipe configurations
figure 16 is a schematic cross-sectional diagram of an acoustic sensor attached to a pipe in an alternative configuration;
figure 17 is a schematic diagram of a liquid processing system incorporating an apparatus with an acoustic sensor;
figure 18 is a confusion matrix illustrating true class versus predicted class for trained data over a range of stages in a liquid mixing process;
figure 19 is a confusion matrix illustrating true class versus predicted class for unseen data over a range of stages in a liquid mixing process; and
figure 20 is an example plot of sets of rheological parameters derived from sampled acoustic spectra for multiple stages in a liquid mixing process.

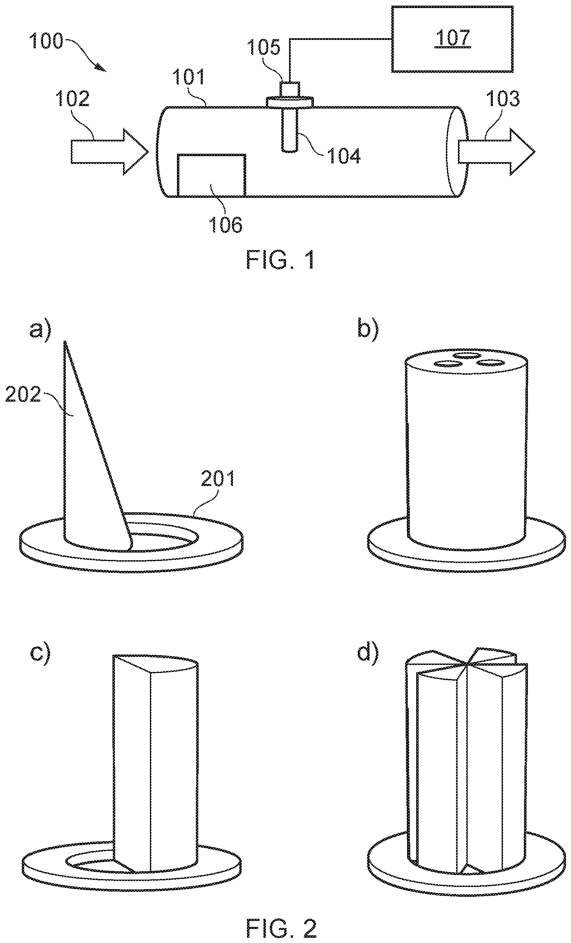

Figure 1 illustrates schematically an apparatus 100 for measuring rheological properties of a liquid flowing through a pipe 101. The flow direction through the pipe 101 is indicated by arrows 102, 103. A rod, or pin, 104 is inserted through a wall of the pipe 101 and extends into an internal volume of the pipe 101, i.e. into the liquid flow path. An acoustic sensor 105 is attached to an end of the rod 104 on the outer wall of the pipe 101. As the liquid flows along the pipe 101, acoustic events are set up within the pipe that depend on rheological properties of the liquid and on changes in fluid flow patterns. The rod 104 itself affects the fluid flow patterns in the flow path, generating acoustic events that are detected by the acoustic sensor 105 by being transmitted along the rod 104. The acoustic events do not require the flow to be multi-phase, but are detectable for single phase liquid flow, and in the case of a fully flooded system. The liquid may, however, contain more than one component, for example in the case of a colloidal suspension of solid, liquid or gas in liquid.

To further enhance the acoustic events generated in the fluid flow, an obstruction 106 may be provided in the pipe 101, the obstruction 106 being positioned upstream of the rod 104. A computer 107 is connected to the acoustic sensor 105 to obtain and sample acoustic signals from the sensor 105 and to perform analysis of the signals as described below.

The obstruction 106 may be a simple narrowing of the internal bore of the pipe 101 or may be a more complex shape. Some examples of possible shapes of obstruction are illustrated in Figure 2, including a conical shape (Figure 2a), multiple passages (Figure 2b), a semicircular section (Figure 2c) and a cross shape (Figure 2d). The obstruction may comprise a flange portion 201 arranged to seal against an end of the pipe 101 and an obstruction portion 202 configured to provide a restriction of the internal volume of the pipe 101. Each of the example obstructions shown in Figure 2 will tend to increase the pressure drop along the pipe 101 to some extent. The degree to which the obstruction 106 increases the pressure drop along the pipe 101 relates to the degree to which the acoustic signals are enhanced such that rheological properties of the liquid can be determined. As an example, in the absence of an obstruction the pressure drop along the pipe 101 may be as small as around 2%, but with an obstruction the pressure drop may increase by at least 10%, and may be 20% or more. An upper limit on the pressure drop is dependent on the liquid and fittings, but may be less than around 3 bar.

The rod 104 may be solid or may be hollow, for example including an internal cavity that is not open to the liquid flowing through the pipe 101. A hollow rod may allow for enhancement of acoustic signals detected by the sensor 105.

In an example experimental apparatus, a stainless steel pipe of 120 mm in length with a 25.4 mm diameter internal bore was used, into which a circular section rod of around 10 mm in diameter was inserted, the rod extending into the middle of the internal bore. Acoustic emission signals were captured with a piezoelectric VS375-M sensor (Vallen Systeme GmbH, Germany), linked to a 2.5 kHz to 2.4 MHz (10 Vpp) AEP5H preamplifier (Vallen Systeme GmbH, Germany) along with a DCPL2 decoupling unit (Vallen Systeme GmbH, Germany), a PicoScope 5000 Series oscilloscope (Pico Technology Ltd, UK) and a personal computer using PicoScope version 6.13.15 software (Pico Technology Ltd, UK). Liquid was pumped through the pipe from a tank, and recirculated back into the tank. Flow rates were adjustable to allow for measurements to be taken in laminar, transitional and turbulent flow conditions.

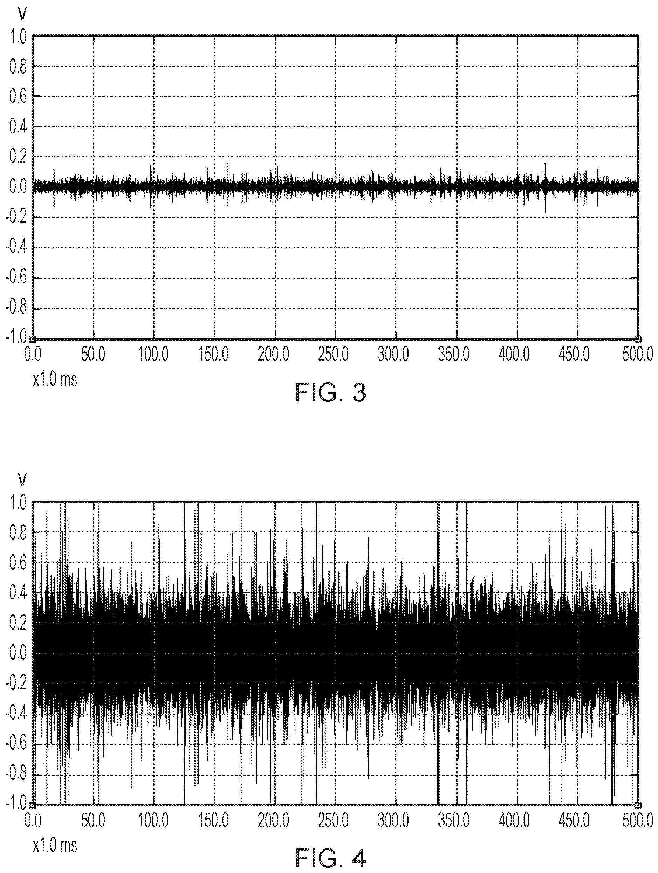

The effect of introducing an obstruction in the pipe can be seen to greatly increase the magnitude of the acoustic output from the sensor. Figure 3 shows an example output of magnitude (arbitrary units) as a function of time over a 500 ms sample for liquid flow in the absence of an obstruction. Figure 4 shows a corresponding output with an obstruction, in this case on the form of the obstruction shown in Figure 2b, i.e. with three holes passing along an otherwise solid insert.

For acoustic sampling, multiple samples were taken, each of a length of 500 ms, a 16 bit resolution and an amplitude of maximum $\pm$ 1 V. The sampling number was set to 600 kS to ensure that the sampling frequency is at least twice the resonance frequency of the sensor. The choice of 500 ms was chosen as the time required to obtain stable Fast Fourier Transform (FFT) spectra over multiple samples.

Three different types of liquids were selected for acoustic measurements, a summary of which is shown in Table 1 below. Distilled water was chosen as an example Newtonian liquid, the addition of glycerol to which changes the consistency but not the flow index or yield shear stress. Solutions of carboxymethylcellulose (MW 70,000) and Carbopol (Lubrizol 940 Non Food Grade) were used as examples of liquids having power law and Herschel-Bulkley rheological properties. A liquid exhibiting power law behaviour will have a zero yield shear stress, while a liquid exhibiting Herschel-Bulkley behaviour will have a yield shear stress. Both types of liquids exhibited shear thinning behaviour, i.e. with a flow index of less than 1. To determine the rheological properties of each liquid, flow curves were obtained and fitted to constitutive models using a Discovery HR-1 rheometer (TA Instruments, USA). The rheometer was equipped with a 60 mm 2° cone-and-plate-geometry and linked to TRIOS software (TA Instruments, USA).

**Table 1:** Summary of example liquid characteristics.

| Identifier | Constituents | $\tau_y$ [Pa] | $\kappa$ [Pa s] | n |
|---|---|---|---|---|
| Newtonian I (Figure 5) | distilled water | 0 | 0.001 | 1 |
| Newtonian II (Figure 6) | 70% glycerol, 30% distilled water | 0 | 0.03 | 1 |
| Power Law I (Figure 7) | 0.1% carboxymethylcellulose in distilled water | 0 | 0.05 | 0.76 |
| Power Law II (Figure 8) | 0.2% carboxymethylcellulose in distilled water | 0 | 0.10 | 0.77 |
| Power Law III (Figure 9) | 0.3% carboxymethylcellulose in distilled water | 0 | 0.16 | 0.74 |
| Herschel-Bulkley I (Figure 10) | 0.10% Carbopol in distilled water, pH 4.5 | 0.06 | 0.02 | 0.76 |
| Herschel-Bulkley II (Figure 11) | 0.15% Carbopol in distilled water, pH 4.5 | 1.62 | 0.78 | 0.32 |
| Herschel-Bulkley III (Figure 12) | 0.20% Carbopol in distilled water, pH 4.5 | 8.24 | 0.66 | 0.28 |

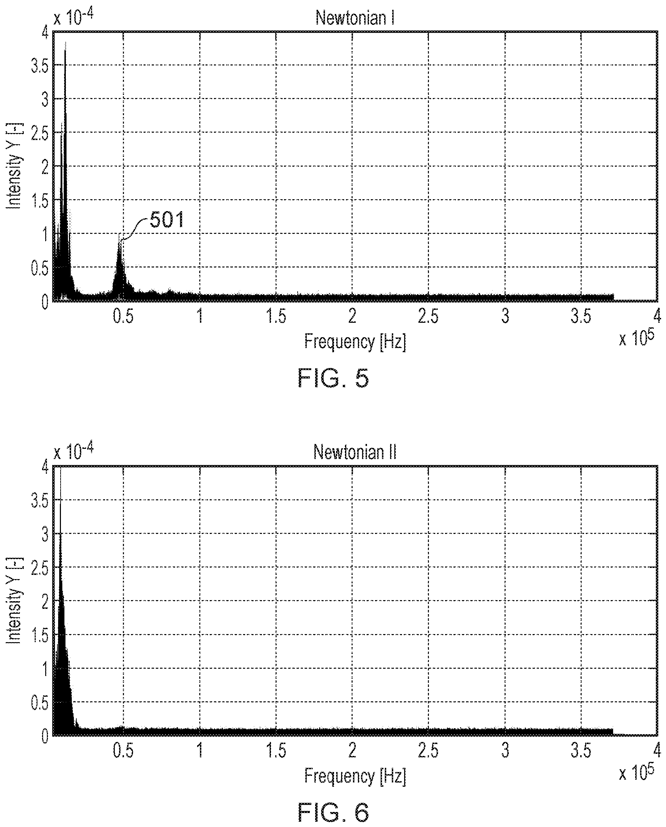

Frequency spectra from each type of liquid were obtained, examples of which are shown in Figures 5 to 12. Each spectrum shows the magnitude, in arbitrary values, of variations in acoustic intensity as a function of frequency.

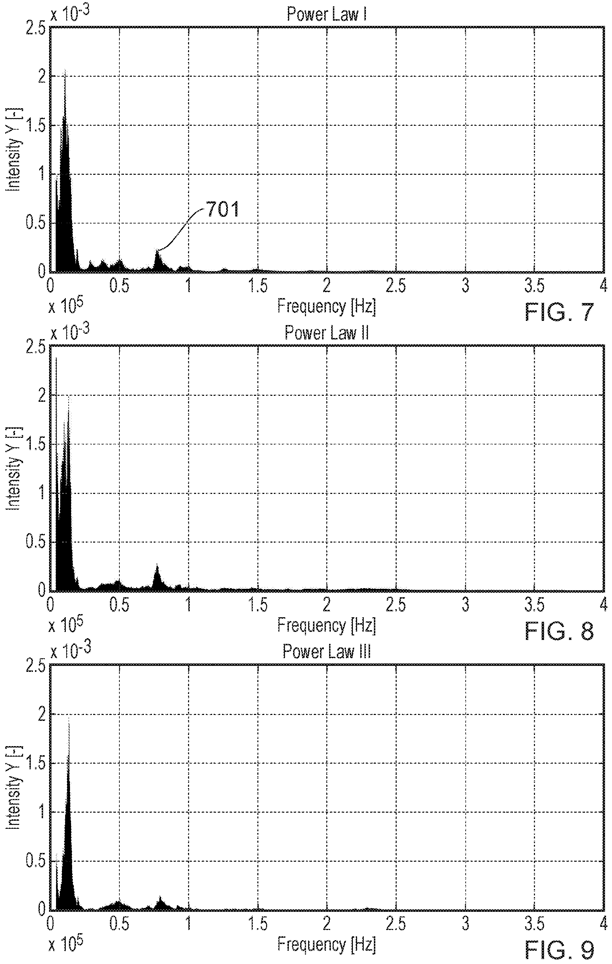

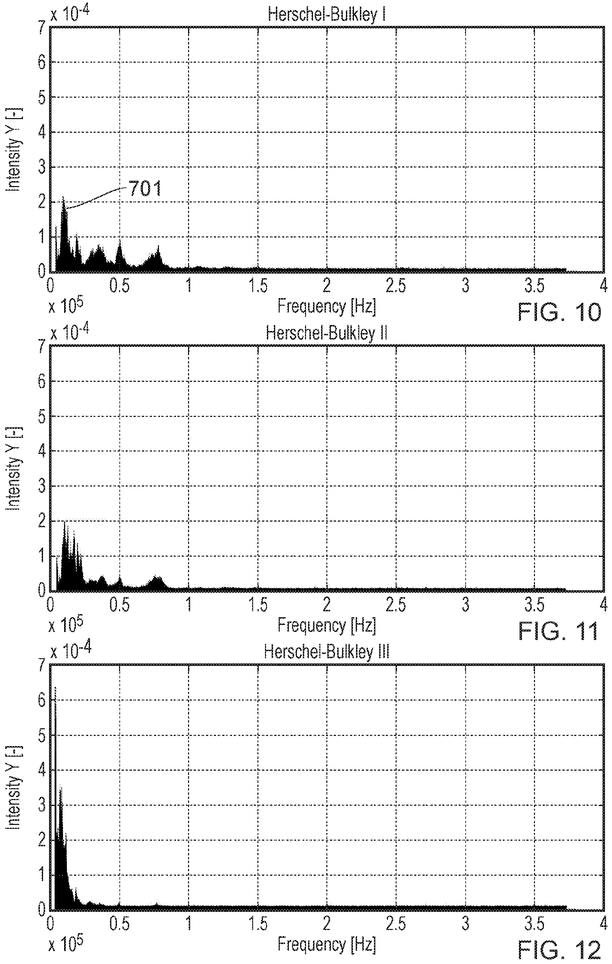

Comparing the spectrum for distilled water (Figure 5) with that for a 70:30 mixture of glycerol and water (Figure 6), a difference can be seen predominantly in the presence of a peak 501 at around 50kHz for water, which is largely absent for the 70:30 mixture. For the liquids exhibiting power law behaviour, the results of which are shown in Figures 7, 8 and 9, a peak 701 at around 80kHz is present, the magnitude of which varies with concentration. The presence of other peaks relative to this also varies with concentration. For the liquids exhibiting Herschel-Bulkley behaviour, the frequency spectra shown in Figures 10, 11 and 12 show different features, the main difference with the other spectra being a much reduced low frequency peak 1001 relative to the other peaks. Higher frequency components are reduced as the concentration of Carbopol increases, which corresponds with an increase in yield shear stress.

To determine whether such frequency spectra could be used to identify the rheological properties of a particular liquid, comparisons between unknown and known spectra were made using a machine learning algorithm employing supervised machine learning. In a first step, the spectra were band limited to above 4kHz, as any signals below this were considered to be environmental noise. Any positive and negative infinite values, i.e. those out of the amplitude range of the measurement equipment, were filtered and replaced by $\pm 1$. For each spectrum, the frequency resolution was reduced to 5,000 selected frequencies, and for each selected frequency a relative variance was determined. The relative variance was chosen over a simple variance because in this way the absolute values have been weighted on the mean values. If only absolute values were taken this would have neglected small values of magnitude, even if their relative change was high. Finally, for each sample the 5,000 FFT values with the largest relative variance were selected, resulting in a standardised spectrum suitable for comparison.

Once the frequency domain matrices were scaled to make them comparable to each other, they were divided into three matrices, representing Training (60%), Optimisation (20%) and Model Validation (20%). Machine learning algorithms were implemented using MATLAB (MathWorks).

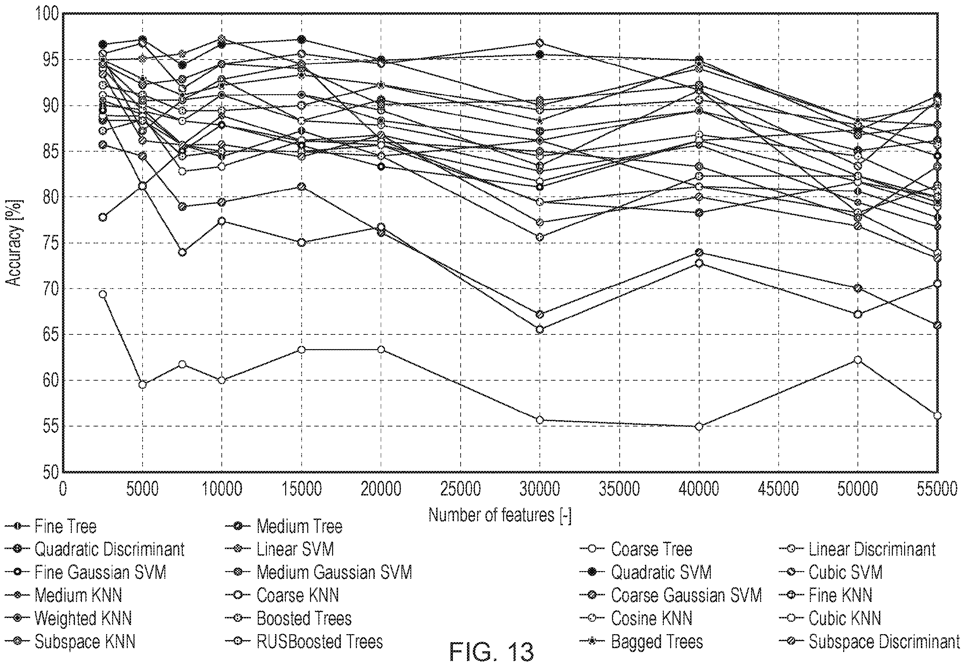

Figure 13 shows the results of using a variety of standard machine learning algorithms to match frequency spectra using principle component analysis (PCA) with 15 components, showing accuracy as a function of the number of features. It can be seen that increasing the number of features above 5000 does not assist in improving accuracy, and that although there is a range of accuracy between different algorithms there are many algorithms that are suitable with an accuracy of over 85%. The SVM (support vector machine) quadratic algorithm delivered the highest level of accuracy overall.

An advantage of using PCA in the frequency domain is to choose a set of weights by exploiting the cross-correlations between the signals at particular cycles. For example, the behaviour of the variables under study can be different in the short, medium and long run. Using PCA in the frequency domain thereby allows weights to be chosen depending on the frequency. The difference between PCA in the time domain and frequency domain can be understood in terms of how the eigenvalues are computed. In the time-domain, the correlation matrix is used. In the frequency-domain, the fast Fourier transform of the correlation matrix or the spectral density matrix is used to compute the eigenvalues. However, the disadvantage using this method is that the original time-spectrum cannot be recovered, although this is not of particular importance for application of the invention, given that the aim is to match spectra to identify rheological properties.

With the different types of liquids as described above, prediction accuracies of generally 95% or greater was possible, indicating that an unknown liquid could be identified with high certainty if a spectrum of a liquid having similar rheological properties has been stored.

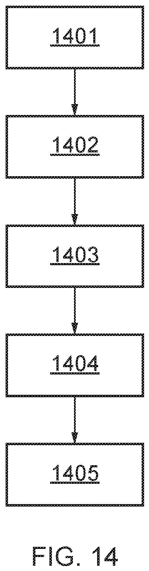

Figure 14 illustrates an example flow diagram of a method of identifying a rheological property of a liquid flowing in a pipe, which may for example be implemented in a continuous way as part of a process measurement system. In a first step 1401, an acoustic signal is detected, the acoustic signal being generated by the liquid flowing in the pipe and detected using a sensor attached to a rod extending from a wall of the pipe into the liquid. In a second step 1402, the acoustic signal is sampled to provide a sampled acoustic signal. This acoustic signal is then transformed into the frequency domain (step 1403) to generate a sampled frequency spectrum. The sampled frequency spectrum is then correlated with a stored frequency spectrum from a database of stored frequency spectra of liquids having predetermined rheological properties (step 1404). A rheological property can then be identified of the liquid flowing in the pipe based on the stored frequency spectrum (1405). The method may be performed continuously as part of an industrial process measurement system to continuously monitor the rheological behaviour of a liquid flowing through a part of the industrial process. A change in rheological behaviour can thereby be automatically identified and, if necessary, notified or otherwise monitored and recorded over time.

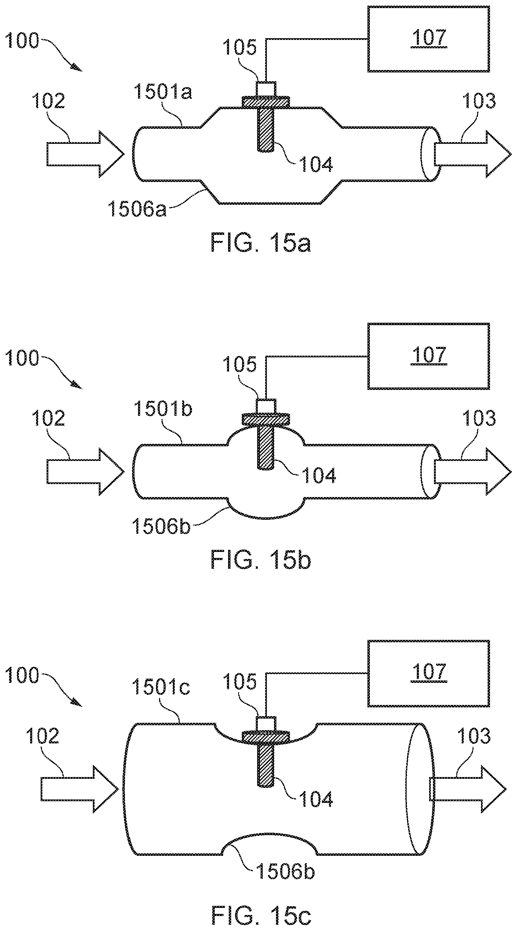

Figures 15a, 15b and 15c illustrate alternative configurations to the arrangement of Figure 1, in which the cross-sectional shape of the pipe 1501a-c varies along its length to provide an equivalent feature to the obstruction 106 of Figure 1 so as to enhance the acoustic signal received by the acoustic sensor 105. The pipe 1501a, b may for example broaden in diameter, as in Figures 15a and 15b, or narrow in diameter, as in Figure 15c, in a region encompassing the acoustic sensor 105. In a general aspect, an internal cross-section of the pipe 1501a-c may vary upstream and/or downstream of the acoustic sensor 105, for example such that the internal cross-section broadens or narrows upstream of the acoustic sensor 105 and narrows or broadens downstream of the acoustic sensor 105.

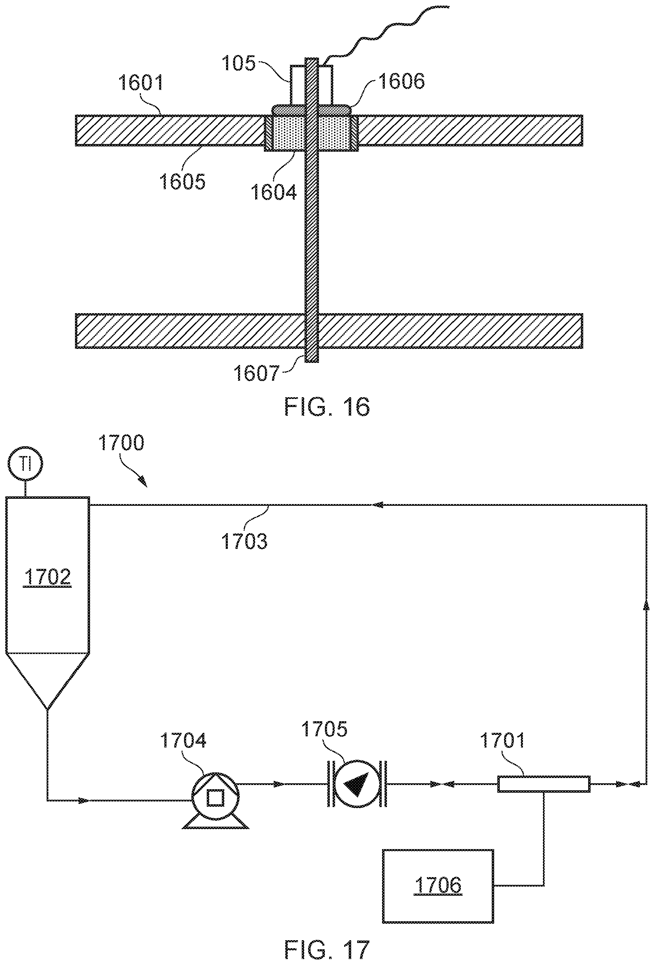

Figure 16 illustrates a detailed sectional view of an alternative example of an acoustic sensor 105 mounted to a pipe 1601. In this example the sensor 105 is secured to a rod or plug 1604 that is screwed into the pipe wall 1605. The sensor 105 is attached to the plug 1604 with an acoustic coupling 1606 such as a silicone cushion or acoustic glue. The sensor 105 is held in place against the plug 1604 by a strap 1607 extending around the sensor 105 and the outer diameter of the pipe 1601. Other features of the apparatus and method of sensing may be similar to the other embodiments described herein.

The methods and apparatus described herein may be used as part of an in-line rheological measurement system to monitor the rheology of a liquid within an industrial process. Figure 17 illustrates schematically a system 1700 incorporating an apparatus 1701 for measuring the rheological properties of liquid in a mixing tank 1702. The liquid in the tank 1702 flows through a measurement loop 1703 comprising a pump 1704, a flow meter 1705 and a measurement apparatus 1701. The apparatus 1701 may be in the form as described elsewhere herein, i.e. incorporating a sensor attached to a section of pipe and a computer 1706.

As the liquid in the mixing tank 1702 is processed, for example by shear mixing and addition of ingredients, the rheology of the liquid will change. The apparatus 1701 is configured to perform a series of measurements on the liquid flowing through the measurement loop 1703 and determine when the rheology has changed. This can be used to determine when to transition between steps in a manufacturing process. As an example, a manufacturing process for a formulated liquid personal care product was monitored over a series of processing stages involving emulsification followed by additions of water and other ingredients, with a final high shear mixing stage. This process was divided up into 14 classes, as shown in Table 2 below. Each class is associated with a difference in rheological properties. A machine learning algorithm was trained over the processing stages and the training data was then used to predict each stage from other unknown data.

**Table 2: Classification of stages during manufacturing of an example liquid product.**

| Class Number | Description |
| --- | --- |
| Class 1 | 5 Minutes into Emulsification |
| Class 2 | 10 Minutes into Emulsification |
| Class 3 | 15 Minutes into Emulsification |
| Class 4 | 20 Minutes into Emulsification |
| Class 5 | 25 Minutes into Emulsification |
| Class 6 | 30 Minutes into Emulsification |
| Class 7 | During Addition of Water |
| Class 8 | During Addition of Water |
| Class 9 | Total Addition of Water |
| Class 10 | 5 Minutes After Water Addition |
| Class 11 | 5 Minutes After Addition of Ingredient 1 |
| Class 12 | 5 Minutes After Addition of Ingredient 2 |
| Class 13 | 5 Minutes After Addition of Ingredient 3 |
| Class 14 | After High Shearing for 5 Minutes |

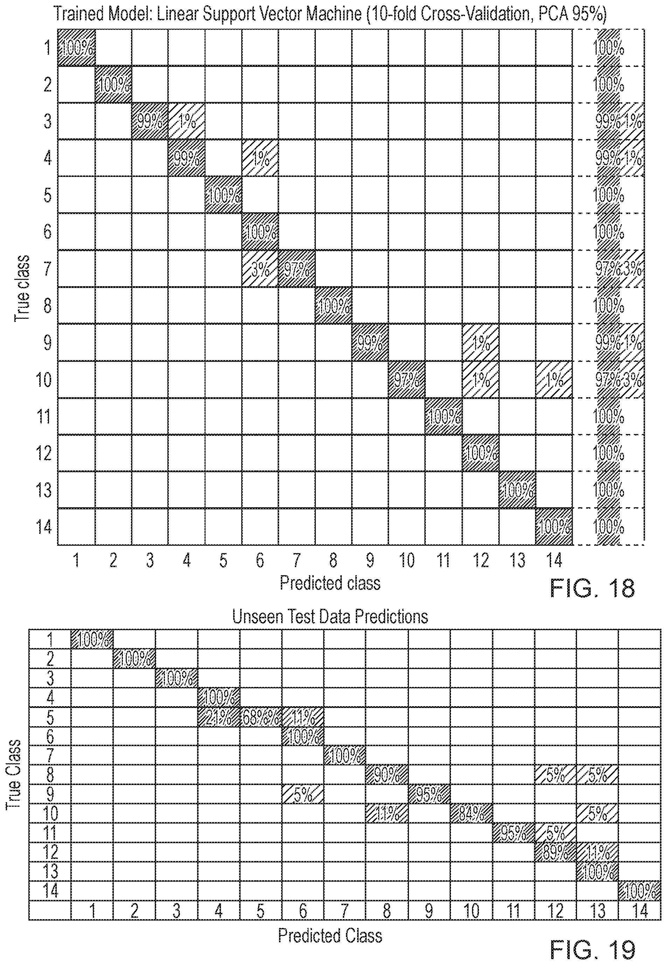

Figure 18 illustrates results in the form of a confusion matrix, where the predicted class is plotted against the true class for each stage of the manufacturing process for the trained model. In this example a linear support vector machine (SVM) was used, which showed the highest accuracy at around 99%, with other models such as quadratic SVM showing a slightly lower accuracy at 97.6%. Further accuracy improvements could be obtained through using more iterations.

Figure 19 shows a confusion matrix of true class against predicted class for unseen test data, demonstrating an overall accuracy of 94.4%. The largest errors in this case involve distinguishing between different stages of emulsification between 20 and 30 minutes, suggesting that the difference in rheological properties of the liquid over these stages is small. Similarly, a reduction to 90% for class 8 indicates that the change in rheology after addition of water is also small.

Based on the above example, a trained machine learning algorithm may be used to monitor acoustic signals from an acoustic sensor during a production process to determine when a particular manufacturing process stage of a liquid is complete. In a general aspect therefore, a method of monitoring a manufacturing process of a liquid may involve performing a mixing process on the liquid, passing the liquid through a pipe and performing a method as described herein to identify a stage of the manufacturing process. The mixing process may for example include addition of an ingredient to the liquid and mixing of the liquid, for example by shearing the liquid.

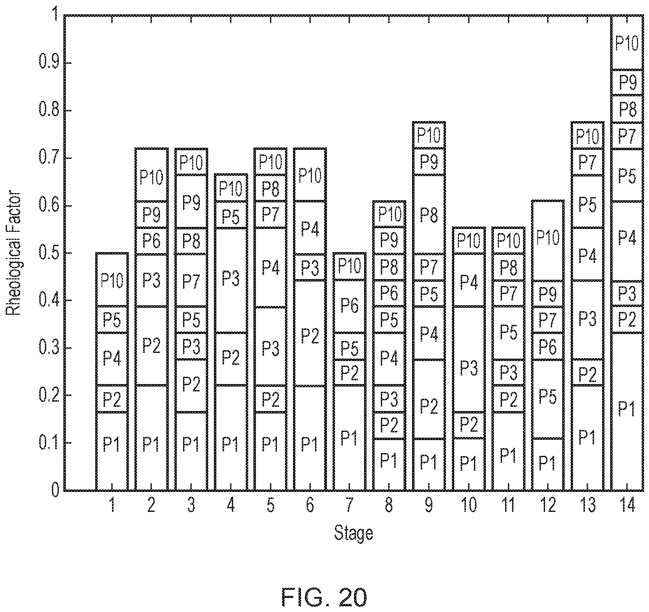

Acoustic signals measured and processed according to the above examples will tend to contain large amounts of measurement data, typically in the region of thousands to hundreds of thousands of data points per measurement. In particular for online monitoring of rheological measurements it can be challenging to process the measurement data quickly enough. In alternative examples, the measurement data may be simplified prior to a determination of rheological properties without losing the key information provided by the raw signal. An example illustration of a simplified series of measurements is shown in Figure 20. In this, acoustic signals are measured and processed for stages 1 to 14 of the process as described above. For each stage, 40 seconds of acoustic signals were recorded and processed, the processing taking around 1 minute in each case. The frequency spectrum for each recording was divided into 10 sections, identified by parameters P1 to P10 in Figure 20. The relative magnitude of each section is plotted in Figure 20, all relative to the maximum cumulative magnitude of stage 14. The relative contributions of each part of the frequency spectrum represented by the magnitudes of parameters P1 to P10 can be matched with a stored set of measurements representing different rheological properties. In a process such as the one described above, the changes in relative magnitudes of the sections of the frequency spectrum can be used to indicate a transition from one stage to the next. Each set of parameters may be considered to represent a rheological factor for a particular liquid having defined rheological properties.

The sections of the frequency spectrum for each measurement can be chosen based on the expected key portions of the frequency spectrum and may for example be selected to avoid known regions of unrepresentative noise or unchanging background and/or to select portions that are particularly representative of certain rheological properties. A sampled frequency spectrum may be divided into a plurality of sections, for example 10 or more sections, and an amplitude of each section determined. The resulting set of parameters, which may be arranged in the form of a matrix, is then correlated with a stored set of parameters to identify a rheological property of the liquid. Typical numbers of parameters may be 10 or 20, or in a general aspect may be between around 10 and around 100. A smaller number of parameters will result in faster processing but reduced accuracy, while a larger number of parameters will result in longer processing but greater accuracy. It has been found that 10 parameters is generally sufficient to identify the required rheological properties in the examples described, although more may be needed in other cases where finer distinctions between rheological properties may be required.

Another factor in determining the accuracy and processing speed is the length of time each acoustic signal is sampled. In the example shown in Figure 20 samples were taken over 40 seconds. Shorter samples may be sufficient. Samples as short as 0.5 seconds were also taken, which required only 5 seconds of processing, and provided sufficiently accurate representations to determine rheological differences. In a general aspect therefore, each sampled acoustic signal may represent a sampling time of 0.5 seconds or more of the acoustic signal generated by the liquid flowing in the pipe. The sampling time may for example be between around 0.5 second and 60 seconds, with longer sampling times tending to produce more accurate data but with longer processing times.

Other embodiments are intentionally within the scope of the invention as defined by the appended claims.

**References**

Rahman M, Håkansson U and Wiklund J 2015 In-line rheological measurements of cement grouts: Effects of water/cement ratio and hydration Tunn. Undergr. Sp. Technol. 45 34-42

Kotzé R, Ricci S, Birkhofer B and Wiklund J 2016 Performance tests of a new non-invasive sensor unit and ultrasound electronics Flow Meas. Instrum. 48 104-11

Khulief Y A and Khalifa A 2012 On the In-Pipe Measurements of Acoustic Signature of Leaks in Water Pipelines Volume 12: Vibration, Acoustics and Wave Propagation (ASME) p 429

Li S, Song Y and Zhou G 2018 Leak detection of water distribution pipeline subject to failure of socket joint based on acoustic emission and pattern recognition Measurement 115 39-44

Hou R, Hunt A and Williams R. 1999 Acoustic monitoring of pipeline flows: particulate slurries Powder Technol. 106 30-6

O'Keefe C V, Maron R, Felix J, van der Spek A M and Rothman P 2010 Non-invasive passive array technology for improved flow measurements of slurries and entrained air The 4th International Platinum Conference: Platinum in transition 'Boom or Bust' ed CiDRA Holdings (Johannesburg: The Southern African Institute of Mining and Metallurgy) pp 21-30

Finfer D, Parker T R, Mahue V, Amir M, Farhadiroushan M and Shatalin S 2015 Non-intrusive Multiple Zone Distributed Acoustic Sensor Flow Metering SPE Annual Technical Conference and Exhibition (Houston: Society of Petroleum Engineers) pp 1-9

**Claims**

1. A method of identifying a rheological property of a liquid flowing in a pipe (101, 1501a, 1501b, 1501c, 1601), the method comprising:

    detecting (1401) an acoustic signal generated by the liquid flowing in the pipe (101, 1501a, 1501b, 1501c, 1601) using an acoustic sensor (105) attached to a rod (104) extending from a wall of the pipe (101, 1501a, 1501b, 1501c, 1601) into the liquid, the acoustic sensor (105) being attached to an end of the rod (104) on the outer wall of the pipe (101, 1501a, 1501b, 1501c, 1601), the acoustic signal being generated within the rod (104) by the liquid flowing in the pipe (101, 1501a, 1501b, 1501c, 1601), transmitted along the rod (104) and detected by the acoustic sensor (105);

sampling (1402) the acoustic signal to provide a sampled acoustic signal;

transforming (1403) the sampled acoustic signal to generate a sampled frequency spectrum;

correlating (1404) the sampled frequency spectrum with a stored frequency spectrum from a database of stored frequency spectra of liquids having predetermined rheological properties; and

identifying (1405) a rheological property of the liquid based on the stored frequency spectrum.

2. The method of claim 1, wherein the rheological property is one or more of a yield shear stress $\tau_0$, a flow index $n$ and a consistency $k$ of the liquid, based on a rheological model of $\tau = \tau_0 + k\dot{\gamma}^n$, where $\tau$ is a shear stress and $\dot{\gamma}$ is a shear rate.

3. The method of claim 1 or claim 2, wherein the step of correlating the sampled frequency spectrum with a stored frequency spectrum is performed using a machine learning algorithm.

4. The method of any one of the preceding claims, wherein the liquid flowing in the pipe (101, 1501a, 1501b, 1501c, 1601) is a single phase liquid.

5. The method of any one of the preceding claims, wherein the pipe (101, 1501a, 1501b, 1501c, 1601) is fully flooded with the liquid flowing in the pipe (101, 1501a, 1501b, 1501c, 1601).

6. A method of monitoring a manufacturing process of a liquid, the method comprising:

performing a mixing process on the liquid;

passing the liquid through a pipe (101, 1501a, 1501b, 1501c, 1601); and

performing the method according to any preceding claim to identify a stage of the manufacturing process.

7. The method of any one of the preceding claims, wherein the sampled frequency spectrum comprises a plurality of sections defining a portion of the sampled frequency spectrum, each section being defined by a parameter representing an amplitude of the acoustic signal within the portion of the sampled frequency spectrum, the database comprising stored frequency spectra having a corresponding plurality of sections and parameters, wherein, optionally, each of the sampled and stored frequency spectra is defined by between 10 and 100 parameters.

8. An apparatus (100) for identifying a rheological property of a liquid flowing in a pipe (101, 1501a, 1501b, 1501c, 1601), the apparatus (100) comprising:

a pipe (101, 1501a, 1501b, 1501c, 1601) through which the liquid is arranged to flow, the pipe (101, 1501a, 1501b, 1501c, 1601) comprising an acoustic sensor (105) attached to a rod (104) extending from a wall of the pipe (101, 1501a, 1501b, 1501c, 1601) into an internal volume of the pipe (101, 1501a, 1501b, 1501c, 1601), the acoustic sensor (105) arranged to detect an acoustic signal generated by the liquid flowing in the pipe (101, 1501a, 1501b, 1501c, 1601);

a computer (107) connected to the acoustic sensor (105) and configured to:

sample the acoustic signal to provide a sampled acoustic signal;

transform the sampled acoustic signal to generate a sampled frequency spectrum;

correlate the sampled frequency spectrum with a stored frequency spectrum from a database of stored frequency spectra of liquids having predetermined rheological properties; and

identify a rheological property of the liquid based on the stored frequency spectrum,

wherein the acoustic sensor (105) is attached to an end of the rod (104) on an outer wall of the pipe (101, 1501a, 1501b, 1501c, 1601) and arranged to detect acoustic events generated within the rod (104) by the liquid flowing in the pipe (101, 1501a, 1501b, 1501c, 1601) and transmitted along the rod (104).

9. The apparatus (100) of claim 8, wherein the rod (104) extends to a centre of an interior volume of the pipe (101, 1501a, 1501b, 1501c, 1601).

10. The apparatus (100) of claim 8 or claim 9, wherein either (a) the pipe (101, 1501a, 1501b, 1501c, 1601) comprises an obstruction (106) upstream of the rod (104), the obstruction (106) configured to increase a pressure drop along the pipe (101, 1501a, 1501b, 1501c, 1601) by more than 10%, and/or wherein (b) an internal cross-section of the pipe (101, 1501a, 1501b, 1501c, 1601) varies upstream and/or downstream of the acoustic sensor (105).

11. The apparatus (100) of any one of claims 8 to 10, wherein the rheological property is one or more of a yield shear stress $\tau_0$, a flow index $n$ and a consistency $k$ of the liquid, based on a rheological model of $\tau = \tau_0 + k\dot{\gamma}^n$, where $\tau$ is a shear stress and $\dot{\gamma}$ is a shear rate.

12. The apparatus (100) of any one of claims 8 to 11, wherein the computer (107) is configured to correlate the sampled frequency spectrum with the stored frequency spectrum using a machine learning algorithm.

13. The apparatus (100) of any of claims 8 to 12, wherein the sampled frequency spectrum comprises a plurality of sections defining a portion of the sampled frequency spectrum, each section being defined by a parameter representing an amplitude of the acoustic signal within the portion of the sampled frequency spectrum, the database comprising stored frequency spectra having a corresponding plurality of sections and parameters, wherein, optionally, each of the sampled and stored frequency spectra is defined by between 10 and 100 parameters.

14. A computer program comprising instructions to cause the apparatus according to any one of claims 8 to 13 to perform the steps of the method according to anyone of claims 1 to 7.

15. A system for processing a liquid, comprising:

a mixing tank for containing the liquid;
a measurement loop arranged to divert liquid to and from the mixing tank; and
the apparatus (100) according to any one of claims 8 to 13,
wherein the pipe (101, 1501a, 1501b, 1501c, 1601) forms part of the measurement loop, the apparatus (100) being configured to measure a rheological property of the liquid passing through the measurement loop.

**Patentansprüche**

1. Verfahren zum Identifizieren einer rheologischen Eigenschaft einer Flüssigkeit, die in einem Rohr (101, 1501a, 1501b, 1501c, 1601) fließt, wobei das Verfahren Folgendes umfasst:

Erfassen (1401) eines akustischen Signals, das durch die Flüssigkeit, die in dem Rohr (101, 1501a, 1501b, 1501c, 1601) fließt, erzeugt wird, unter Verwendung eines Akustiksensors (105), der an einem Stab (104) befestigt ist, der sich von einer Wand des Rohrs (101, 1501a, 1501b, 1501c, 1601) in die Flüssigkeit hinein erstreckt, wobei der Akustiksensor (105) an einem Ende des Stabs (104) an der Außenwand des Rohrs (101, 1501a, 1501b, 1501c, 1601) befestigt ist, wobei das akustische Signal innerhalb des Stabs (104) durch die Flüssigkeit, die in dem Rohr (101, 1501a, 1501b, 1501c, 1601) fließt, erzeugt wird, entlang des Stabs (104) übertragen und durch den Akustiksensor (105) erfasst wird;
Abtasten (1402) des akustischen Signals, um ein abgetastetes akustisches Signal bereitzustellen;
Umwandeln (1403) des abgetasteten akustischen Signals, um ein abgetastetes Frequenzspektrum zu erzeugen;
Korrelieren (1404) des abgetasteten Frequenzspektrums mit einem gespeicherten Frequenzspektrum aus einer Datenbank gespeicherter Frequenzspektren von Flüssigkeiten, die vorbestimmte rheologische Eigenschaften aufweisen; und
Identifizieren (1405) einer rheologischen Eigenschaft der Flüssigkeit basierend auf dem gespeicherten Frequenzspektrum.

2. Verfahren nach Anspruch 1, wobei die rheologische Eigenschaft eines oder mehrere von einer Schubfließspannung $\tau_0$, einem Flussindex $n$ und einer Konsistenz $k$ der Flüssigkeit ist, basierend auf einem rheologischen Modell von $\tau = \tau_0 + k\dot{\gamma}^n$, wobei $\tau$ eine Schubspannung und $\dot{y}$ eine Schubgeschwindigkeit ist.

3. Verfahren nach Anspruch 1 oder Anspruch 2, wobei der Schritt des Korrelierens des abgetasteten Frequenzspektrums mit einem gespeicherten Frequenzspektrum unter Verwendung eines maschinellen Lernalgorithmus durchgeführt wird.

4. Verfahren nach einem der vorhergehenden Ansprüche, wobei die Flüssigkeit, die in dem Rohr (101, 1501a, 1501b, 1501c, 1601) fließt, eine einphasige Flüssigkeit ist.

5. Verfahren nach einem der vorhergehenden Ansprüche, wobei das Rohr (101, 1501a, 1501b, 1501c, 1601) vollständig mit der Flüssigkeit, die in dem Rohr (101, 1501a, 1501b, 1501c, 1601) fließt, geflutet ist.

6. Verfahren zum Überwachen eines Herstellungsvorgangs einer Flüssigkeit, wobei das Verfahren Folgendes umfasst:

   Durchführen eines Mischvorgangs an der Flüssigkeit;
   Durchleiten der Flüssigkeit durch ein Rohr (101, 1501a, 1501b, 1501c, 1601); und
   Durchführen des Verfahrens nach einem vorhergehenden Anspruch, um eine Stufe des Herstellungsvorgangs zu identifizieren.

7. Verfahren nach einem der vorhergehenden Ansprüche, wobei das abgetastete Frequenzspektrum eine Vielzahl von Abschnitten umfasst, die einen Teil des abgetasteten Frequenzspektrums definieren, wobei jeder Abschnitt durch einen Parameter definiert ist, der eine Amplitude des Akustiksignals innerhalb des Teils des abgetasteten Frequenzspektrums darstellt, wobei die Datenbank gespeicherte Frequenzspektren umfasst, die eine entsprechende Vielzahl von Abschnitten und Parametern aufweisen, wobei optional jedes der abgetasteten und gespeicherten Frequenzspektren durch zwischen 10 und 100 Parameter definiert ist.

8. Vorrichtung (100) zum Identifizieren einer rheologischen Eigenschaft einer Flüssigkeit, die in einem Rohr (101, 1501a, 1501b, 1501c, 1601) fließt, wobei die Vorrichtung (100) Folgendes umfasst:

   ein Rohr (101, 1501a, 1501b, 1501c, 1601), durch das die Flüssigkeit zu fließen angeordnet ist, wobei das Rohr (101, 1501a, 1501b, 1501c, 1601) einen Akustiksensor (105) umfasst, der an einem Stab (104) befestigt ist, der sich von einer Wand des Rohrs (101, 1501a, 1501b, 1501c, 1601) in ein Innenvolumen des Rohrs (101, 1501a, 1501b, 1501c, 1601) erstreckt, wobei der Akustiksensor (105) angeordnet ist, um ein akustisches Signal zu erfassen, das durch die Flüssigkeit, die in dem Rohr (101, 1501a, 1501b, 1501c, 1601) fließt, erzeugt wird;
   einen Computer (107), der mit dem Akustiksensor (105) verbunden und zu Folgendem konfiguriert ist:

      Abtasten des akustischen Signals, um ein abgetastetes akustisches Signal bereitzustellen;
      Umwandeln des abgetasteten akustischen Signals, um ein abgetastetes Frequenzspektrum zu erzeugen;
      Korrelieren des abgetasteten Frequenzspektrums mit einem gespeicherten Frequenzspektrum aus einer Datenbank gespeicherter Frequenzspektren von Flüssigkeiten, die vorbestimmte rheologische Eigenschaften aufweisen; und
      Identifizieren einer rheologischen Eigenschaft der Flüssigkeit basierend auf dem gespeicherten Frequenzspektrum,
      wobei der Akustiksensor (105) an einem Ende des Stabs (104) an einer Außenwand des Rohrs (101, 1501a, 1501b, 1501c, 1601) befestigt ist und angeordnet ist, um akustische Ereignisse zu erfassen, die innerhalb des Stabs (104) durch die Flüssigkeit, die in dem Rohr (101, 1501a, 1501b, 1501c, 1601) fließt, erzeugt und entlang des Stabs (104) übertragen werden.

9. Vorrichtung (100) nach Anspruch 8, wobei sich der Stab (104) bis zu einem Zentrum eines Innenvolumens des Rohrs (101, 1501a, 1501b, 1501c, 1601) erstreckt.

10. Vorrichtung (100) nach Anspruch 8 oder Anspruch 9, wobei entweder (a) das Rohr (101, 1501a, 1501b, 1501c, 1601) ein Hindernis (106) stromaufwärts des Stabs (104) umfasst, wobei das Hindernis (106) dazu konfiguriert ist, einen Druckabfall entlang des Rohrs (101, 1501a, 1501b, 1501c, 1601) um mehr als 10 % zu erhöhen, und/oder wobei (b) ein innerer Querschnitt des Rohrs (101, 1501a, 1501b, 1501c, 1601) stromaufwärts und/oder stromabwärts des Akustiksensors (105) variiert.

11. Vorrichtung (100) nach einem der Ansprüche 8 bis 10, wobei die rheologische Eigenschaft eines oder mehrere von einer Schubfließspannung $\tau_0$, einem Flussindex $n$ und einer Konsistenz $k$ der Flüssigkeit ist, basierend auf einem rheologischen Modell von $\tau = \tau_0 + k\dot{y}^n$, wobei $\tau$ eine Schubspannung und $\dot{y}$ eine Schubgeschwindigkeit ist.

12. Vorrichtung (100) nach einem der Ansprüche 8 bis 11, wobei der Computer (107) dazu konfiguriert ist, das abgetastete Frequenzspektrum unter Verwendung eines maschinellen Lernalgorithmus mit dem gespeicherten Frequenzspektrum zu korrelieren.

13. Vorrichtung (100) nach einem der Ansprüche 8 bis 12, wobei das abgetastete Frequenzspektrum eine Vielzahl von Abschnitten umfasst, die einen Teil des abgetasteten Frequenzspektrums definieren, wobei jeder Abschnitt durch einen Parameter definiert ist, der eine Amplitude des Akustiksignals innerhalb des Teils des abgetasteten Frequenzspektrums darstellt, wobei die Datenbank gespeicherte Frequenzspektren umfasst, die eine entsprechende Vielzahl von Abschnitten und Parametern aufweisen, wobei optional jedes der abgetasteten und gespeicherten Frequenzspektren durch zwischen 10 und 100 Parameter definiert ist.

14. Computerprogramm, Anweisungen umfassend, die bewirken, dass die Vorrichtung nach einem der Ansprüche 8 bis 13 die Schritte des Verfahrens nach einem der Ansprüche 1 bis 7 durchführt.

15. System zum Verarbeiten einer Flüssigkeit, umfassend:

einen Mischbehälter zum Aufnehmen der Flüssigkeit;
eine Messschleife, die angeordnet ist, um eine Flüssigkeit zu dem und von dem Mischbehälter umzulenken; und
die Vorrichtung (100) nach einem der Ansprüche 8 bis 13,
wobei das Rohr (101, 1501a, 1501b, 1501c, 1601) einen Bestandteil der Messschleife bildet, wobei die Vorrichtung (100) dazu konfiguriert ist, eine rheologische Eigenschaft der Flüssigkeit zu messen, die durch die Messschleife hindurchläuft.

## Revendications

1. Procédé d'identification d'une propriété rhéologique d'un liquide circulant dans une canalisation (101, 1501a, 1501b, 1501c, 1601), le procédé comprenant :

la détection (1401) d'un signal acoustique généré par le liquide circulant dans la canalisation (101, 1501a, 1501b, 1501c, 1601) à l'aide d'un capteur acoustique (105) fixé à une tige (104) s'étendant depuis une paroi de la canalisation (101, 1501a, 1501b, 1501c, 1601) dans le liquide, le capteur acoustique (105) étant fixé à une extrémité de la tige (104) sur la paroi externe de la canalisation (101, 1501a, 1501b, 1501c, 1601), le capteur acoustique étant généré à l'intérieur de la tige (104) par le liquide circulant dans la canalisation (101, 1501a, 1501b, 1501c, 1601), transmis le long de la tige (104) et détecté par le capteur acoustique (105) ;
l'échantillonnage (1402) du signal acoustique pour fournir un signal acoustique échantillonné ;
la transformation (1403) du signal acoustique échantillonné pour générer un spectre de fréquences échantillonné ;
la corrélation (1404) du spectre de fréquences échantillonné avec un spectre de fréquences stocké à partir d'une base de données de spectres de fréquences stockés de liquides comportant des propriétés rhéologiques prédéterminées ; et
l'identification (1405) d'une propriété rhéologique du liquide sur la base du spectre de fréquences stocké.

2. Procédé selon la revendication 1, dans lequel la propriété rhéologique est un ou plusieurs parmi une contrainte d'élasticité de cisaillement $\tau_0$, un indice d'écoulement $n$ et une consistance $k$ du liquide, sur la base d'un modèle rhéologique de $\tau = \tau_0 + k\dot{\gamma}^n$, où $\tau$ est une contrainte de cisaillement et $\dot{y}$ est un taux de cisaillement.

3. Procédé selon la revendication 1 ou la revendication 2, dans lequel l'étape de corrélation du spectre de fréquences échantillonné avec un spectre de fréquences stocké est effectuée à l'aide d'un algorithme d'apprentissage automatique.

4. Procédé selon l'une quelconque des revendications précédentes, dans lequel le liquide circulant dans la canalisation (101, 1501a, 1501b, 1501c, 1601) est un liquide monophasé.

5. Procédé selon l'une quelconque des revendications précédentes, dans lequel la canalisation (101, 1501a, 1501b, 1501c, 1601) est entièrement inondé par le liquide circulant dans la canalisation (101, 1501a, 1501b, 1501c, 1601).

6. Procédé de surveillance d'un processus de fabrication d'un liquide, le procédé comprenant

l'exécution d'un processus de mélange sur le liquide ;
le passage du liquide à travers une canalisation (101, 1501a, 1501b, 1501c, 1601) ; et
l'exécution du procédé selon l'une quelconque des revendications précédentes pour identifier une étape du processus de fabrication.

**7.** Procédé selon l'une quelconque des revendications précédentes, dans lequel le spectre de fréquences échantillonné comprend une pluralité de sections définissant une partie du spectre de fréquences échantillonné, chaque section étant définie par un paramètre représentant une amplitude du signal acoustique dans la partie du spectre de fréquences échantillonné, la base de données comprenant des spectres de fréquences stockés comportant une pluralité correspondante de sections et de paramètres, dans lequel, facultativement, chacun des spectres de fréquences échantillonnés et stockés est défini par entre 10 et 100 paramètres.

**8.** Appareil (100) pour identifier une propriété rhéologique d'un liquide circulant dans une canalisation (101, 1501a, 1501b, 1501c, 1601), l'appareil (100) comprenant :

une canalisation (101, 1501a, 1501b, 1501c, 1601) à travers lequel le liquide est agencé pour circuler, la canalisation (101, 1501a, 1501b, 1501c, 1601) comprenant un capteur acoustique (105) fixé à une tige (104) s'étendant depuis une paroi de la canalisation (101, 1501a, 1501b, 1501c, 1601) dans un volume interne de la canalisation (101, 1501a, 1501b, 1501c, 1601), le capteur acoustique (105) agencé pour détecter un signal acoustique généré par le liquide circulant dans la canalisation (101, 1501a, 1501b, 1501c, 1601) ;
un ordinateur (107) connecté au capteur acoustique (105) et configuré pour :

échantillonner le signal acoustique pour fournir un signal acoustique échantillonné ;
transformer le signal acoustique échantillonné pour générer un spectre de fréquences échantillonné ;
corréler le spectre de fréquences échantillonné avec un spectre de fréquences stocké à partir d'une base de données de spectres de fréquences stockés de liquides comportant des propriétés rhéologiques prédéterminées ; et
identifier une propriété rhéologique du liquide sur la base du spectre de fréquences stocké,
dans lequel le capteur acoustique (105) est fixé à une extrémité de la tige (104) sur une paroi externe de la canalisation (101, 1501a, 1501b, 1501c, 1601) et est agencé pour détecter les événements acoustiques générés à l'intérieur de la tige (104) par le liquide circulant dans la canalisation (101, 1501a, 1501b, 1501c, 1601) et transmis le long de la tige (104).

**9.** Appareil (100) selon la revendication 8, dans lequel la tige (104) s'étend jusqu'au centre d'un volume intérieur de la canalisation (101, 1501a, 1501b, 1501c, 1601).

**10.** Appareil (100) selon la revendication 8 ou la revendication 9, dans lequel soit (a) la canalisation (101, 1501a, 1501b, 1501c, 1601) comprend une obstruction (106) en amont de la tige (104), l'obstruction (106) étant configurée pour augmenter une chute de pression le long de la canalisation (101, 1501a, 1501b, 1501c, 1601) de plus de 10 %, et/ou dans lequel (b) une section transversale interne de la canalisation (101, 1501a, 1501b, 1501c, 1601) varie en amont et/ou en aval du capteur acoustique (105).

**11.** Appareil (100) selon l'une quelconque des revendications 8 à 10, dans lequel la propriété rhéologique est un ou plusieurs parmi une contrainte d'élasticité de cisaillement $\tau_0$, un indice d'écoulement $n$ et une consistance $k$ du liquide, sur la base d'un modèle rhéologique de $\tau = \tau_0 + k\dot{\gamma}^n$, où $\tau$ est une contrainte de cisaillement et $\dot{y}$ est un taux de cisaillement.

**12.** Appareil (100) selon l'une quelconque des revendications 8 à 11, dans lequel l'ordinateur (107) est configuré pour corréler le spectre de fréquences échantillonné avec le spectre de fréquences stocké en utilisant un algorithme d'apprentissage automatique.

**13.** Appareil (100) selon l'une quelconque des revendications 8 à 12, dans lequel le spectre de fréquences échantillonné comprend une pluralité de sections définissant une partie du spectre de fréquences échantillonné, chaque section étant définie par un paramètre représentant une amplitude du signal acoustique dans la partie du spectre de fréquences échantillonné, la base de données comprenant des spectres de fréquences stockés comportant une pluralité correspondante de sections et de paramètres, dans lequel, facultativement, chacun des spectres de fréquences échantillonnés et stockés est défini par entre 10 et 100 paramètres.

**14.** Programme informatique comprenant des instructions pour amener l'appareil selon l'une quelconque des revendications 8 à 13 à exécuter les étapes du procédé selon l'une quelconque des revendications 1 à 7.

**15.** Système permettant le traitement d'un liquide, comprenant :

un réservoir de mélange pour contenir le liquide ;
une boucle de mesure conçue pour dévier le liquide vers et depuis le réservoir de mélange ; et
l'appareil (100) selon l'une quelconque des revendications 8 à 13,
dans lequel la canalisation (101, 1501a, 1501b, 1501c, 1601) fait partie de la boucle de mesure, l'appareil (100) étant configuré pour mesurer une propriété rhéologique du liquide traversant la boucle de mesure.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

EP 3 990 910 B1

FIG. 15a

FIG. 15b

FIG. 15c

22

FIG. 16

FIG. 17

Trained Model: Linear Support Vector Machine (10-fold Cross-Validation, PCA 95%)

Predicted class

FIG. 18

Unseen Test Data Predictions

Predicted Class

FIG. 19

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5353627 A
- WO 2010094809 A1
- WO 02052243 A1
- US 5741980 A
- US 20130345994 A1
- US 7290450 B2

### Non-patent literature cited in the description

- **RAHMAN M ; HÅKANSSON U ; WIKLUND J.** In-line rheological measurements of cement grouts: Effects of water/cement ratio and hydration. *Tunn. Undergr. Sp. Technol.,* 2015, vol. 45, 34-42
- **KOTZÉ R ; RICCI S ; BIRKHOFER B ; WIKLUND J.** Performance tests of a new non-invasive sensor unit and ultrasound electronics. *Flow Meas. Instrum,* 2016, vol. 48, 104-11
- **KHULIEF Y A ; KHALIFA A.** On the In-Pipe Measurements of Acoustic Signature of Leaks in Water Pipelines Volume. *Vibration, Acoustics and Wave Propagation (ASME),* 2012, vol. 12, 429
- **LI S ; SONG Y ; ZHOU G.** Leak detection of water distribution pipeline subject to failure of socket joint based on acoustic emission and pattern recognition. *Measurement,* 2018, vol. 115, 39-44
- **HOU R ; HUNT A ; WILLIAMS R.** Acoustic monitoring of pipeline flows: particulate slurries. *Powder Technol.,* 1999, vol. 106, 30-6
- 2010 Non-invasive passive array technology for improved flow measurements of slurries and entrained air The 4th International Platinum Conference: Platinum in transition. **O'KEEFE C V ; MARON R ; FELIX J ; VAN DER SPEK A M ; ROTHMAN P.** Boom or Bust' ed CiDRA Holdings. The Southern African Institute of Mining and Metallurgy, 21-30
- **FINFER D ; PARKER T R ; MAHUE V ; AMIR M ; FARHADIROUSHAN M ; SHATALIN S.** Non-intrusive Multiple Zone Distributed Acoustic Sensor Flow Metering SPE Annual Technical Conference and Exhibition. Society of Petroleum Engineers, 2015, 1-9